# EUROPÄISCHE PATENTSCHRIFT

(11) **EP 0 410 284 B1**
(45) Veröffentlichungstag und Bekanntmachung des Hinweises auf die Patenterteilung: **28.09.1994**
(21) Anmeldenummer: 90113734.9
(22) Anmeldetag: 18.07.1990
(51) Int. Cl.: C04B 38/00, C22C 1/10, C04B 37/02, C04B 41/88

(54) **Keramik-Metall-Verbundwerkstoff**
A composite ceramic-metal material
Matériau composite céramique-métal

(30) Priorität: 22.07.1989 DE 3924268
(43) Veröffentlichungstag der Anmeldung: 30.01.1991
(73) Patentinhaber: Osaka Fuji Corporation, Amagasaki, Hyogoken 660 (JP)
(72) Erfinder: Schindler, Stefan, Dr, W-5342 Rheinbreitbach (DE); Schultze, Werner, Dr., W-5300 Bonn 1 (DE); Deisenroth, Friedrich-Ulf, W-5204 Lohmar 1 (DE)
(74) Vertreter: Müller-Wolff, Thomas, Dipl.-Ing.

(56) Entgegenhaltungen:
- EP-A- 0 155 831
- EP-A- 0 229 522
- EP-A- 0 250 210
- EP-A- 0 394 817
- DE-A- 3 543 342
- DE-A- 3 724 995
- CHEMICAL ABSTRACTS, vol. 111, no. 26, Dezember 1989 Columbus, Ohio, USA M.Kuwabara et al: "Ceramic articles for joining with metals" Seite 337; ref. no.238421Y &JP-A-1126280(Honda Motor Co)18.05.1989

## Beschreibung

Die Erfindung betrifft ein Keramik-Metall-Verbundwerkstoff, bestehend aus einer porösen mit Metall infiltrierten Keramik, die aus mehreren Schichten unterschiedlicher Porengröße aufgebaut ist.

Aus der DE-A-35 43 342 ist ein Keramik-Metall-Verbundwerkstoff der eingangs genannten Art bekannt. Als Trägerkörper wird dort ein nicht metallischer Feststoff verwendet, der auch aus verschiedenen Porengrößen bestehen kann. Die Porosität im Trägermaterial kann auf verschiedene Weise hergestellt werden, beispielsweise durch Zusammenbacken von Teilchen, durch Halbschmelzen bzw. Sintern oder mittels eines eingeschlossenen Schaum-Stoffes, der nach dem Verfahren entfernt wird. Dies hat zur Folge, daß eine großporige Grundstruktur entsteht, die mittels Schwerkraft oder über Kapillarkräfte mit einem hohen Metallanteil infiltrierbar ist. Demzufolge hat der Füllstoff bzw. das Metall die Aufgabe, eine gute Formstabilität des bekannten Verbundwerkstoffs zu erreichen. Bei hohen Temperaturen ist jedoch diese Formstabilität nicht mehr gewährleistet, da der Metallanteil im Verhältnis zur Keramik des Trägerkörpers eine niedrigere Erweichungstemperatur zeigt.

Aus der DE-A-37 24 995 ist ein Verfahren zur Herstellung eines Verbundkörpers aus einem keramischen Material und einem Metall bekannt, wobei auf einen vorgeformten keramischen Grundkörper ein schmelzflüssiges Metall unter teilweiser Infiltration aufgegossen wird. Dabei entsteht eine feste metallische Beschichtung auf einem keramischen Grundkörper, wobei die Verbindung zwischen Keramik und Metall im Sinne einer "Verzahnung" beider Materialien erfolgt. Der keramische Grundkörper kann aus mehreren Schichten aufgebaut und als Blasform für einen Hochofen ausgebildet sein. Diese Blasformen werden durch Sinterung erzeugt, wobei in einem speziellen Ausführungsbeispiel auch mehrere, einen Metallgehalt aufweisende Keramikschichten durch Plasma- bzw. Flammspritzen von Keramik-Metall-Werkstoffen aufgebracht werden können. Es können auch metall-keramische Beschichtungen durch Elektrophorese-Coating-Verfahren oder durch Lackierung, Tränkung oder dergleichen erfolgen. Auf den so hergestellten Kern werden durch isostatisches Aufpressen von Keramikschichten desselben Grundmaterials Verbundwerkstoffe erzeugt. Die Metallkomponente übernimmt dabei die Funktion der "Verzahnung" beider Materialien, so daß hier im wesentlichen von einem Keramikbauteil mit einer Metallzwischenschicht gesprochen werden kann, die an der Oberfläche mit dem keramischen Grundkörper verzahnt ist.

Aus der EP 0 155 831 (Lanxide) ist ein Keramik-Metall-Verbundwerkstoff der eingangs genannten Art bekannt. Gemäß Anspruch 11 des Lanxid-Patents müssen die Kleinwinkelkorngrenzen innerhalb bestimmter Bereiche liegen, damit eine gute Infiltration des Keramikkörpers ermöglicht wird.

Aus JP 61/163224 (Sumitomo Electric Industries) vom 23. Juli 1986 ist es bekannt, einen Keramikkörper von 85-90 % Porosität mit Aluminiumschmelze unter Druck zu infiltrieren.

Ferner ist es aus GB 21 48 270 (British Ceramic Research Assoc.) vom 30. Mai 1985 bekannt, Cermets dadurch herzustellen, daß man eine poröse SiC-Keramik mit einer Porosität von 39 % mit geschmolzenem Aluminium bei 700 °C und einen Druck von 6,72 kpsi infiltriert.

Weitere Cermets sind im tschechischen Patent CS 20 61 32 vom 01.Oktober 1983 beschrieben. Hier werden durch Evakuierung des porösen keramischen Werkstoffs aus 95-90 % Al₂O₃, Rest SiO₂ durch Infiltrierung mit Aluminium oder Aluminiumverbindungen bei Temperaturen von 700-900 °C unter Intertgas und einem Druck von mehr als 1 MPa hergestellt. Der keramische Formkörper hat vor der Infilitrierung eine Porosität von 41 %.

Im Stand der Technik werden daher hochporöse keramische Werkstoffe mit einer Metallschmelze infiltriert, so daß das daraus hergestellte Produkt überwiegend eine Metallstruktur aufweist. Dieser Metall-Keramik-Verbundwerkstoff (CMC) ist in seinen Eigenschaften weitgehend metallischer Natur, so daß die Anforderungen an Härte, Temperaturbeständigkeit und Verschleißverhalten weit unterhalb derjenigen Weste der rein - keramischen Werkstoffe liegen.

Aufgabe der vorliegenden Erfindung ist es, einen Keramik-Metall-Verbundwerkstoff der eingangs genannten Art hinsichtlich seiner Biegefestigkeit, Zähigkeit, Härte, Verschleißfestigkeit und seines E-Modul und Temperaturverhaltens zu verbessern und gleichzeitig die Anbindung an Metallstrukturen benachbarter Bauelemente zu verbessern. Diese Aufgabe wird dadurch gelöst, daß als Keramik ein Mehrkomponentenwerkstoff auf Oxidbasis im vorreagierten Zustand verwendet wird, d.h. Mischungen aus 2 oder mehreren oxidkeramischen Werlestoffen, die durch Mahlen in Pulverform und bei Sinter-Temperaturen vorreagiert werden; daß die Schichten aus Keramikpartikeln aufgebaut sind, die einen Formfaktor größer 1 : 5 aufweisen und die Keramikpartikel in den einzelnen Schichten des Verbundwerkstoffs unterschiedliche Formfaktoren aufweisen, wobei die Schichtdicken zwischen 10 und 150 »m und der mittlere Porenradius zwischen 100 und 1000 nm bei einer offenen Endporosität von 5-14 % und einer Gesamtporosität von 5-30 % liegt und das Metall das Porenvolumen bis auf ein Restporenvolumen von 0,1-10 %, bezogen auf die Ausgangsporosität, ausfüllt.

Bei einem Mehrschichtenaufbau der Keramik und einer Gesamtporosität von 5-30 % werden durch die Infiltrierung mit Metallschmelze die gewünschte Kombination der Eigenschaften ermöglicht, wenn ein mittlerer Porenradius von 100 bis 1000 nm eingehalten wird und die Schichten aus Keramikpartikeln aufgebaut sind, die einen Formfaktor von größer 1 : 5 aufweisen. Die Gesamtporosität ist dabei die Ausgangsporosität der Keramik vor der Infiltration mit Metallschmelze. Der Porenradius wird mit Hilfe eines Quecksilberporosimeters von Carlo-Erba ermittelt.

Durch den Mehrschichtenaufbau wird eine Porennetzstruktur des keramischen Werkstoffs erreicht, die sich in besonders günstiger Weise mit Metallschmelze infiltrieren läßt. Die Porennetzstruktur ist erfindungsgemäß steuerbar durch die verwendete Partikelgröße des keramischen Materials sowie durch die Auftragsgeschwindigkeit im flüssigkeitsstabilisierten Plasmastrahl.

Anhand von Versuchen hat sich herausgestellt, daß die bei dem Lanxide-Patent angegebenen Kleinwinkelkorngrenzen nicht erforderlich sind, wenn die Keramik eine Porennetzstruktur aufweist, die aus miteinander in Verbindung stehenden Poren und Porenkanälen aufgebaut ist. Diese besondere Struktur liegt erfindungsgemäß dann vor, wenn die Keramik aus mehreren dünnen Schichten aufgebaut ist, die wiederum mit einer einstellbaren Porosität ausgebildet sind.

Für bestimmte Anwendungsfälle z.B. die Anbindung an Metallstrukturen wie geschweißte oder gelötete Keramik/Metallkonstruktionen hat es sich als nützlich erwiesen, daß der keramische Werkstoff eine von innen nach außen zunehmende Porosität und damit einen steigenden Metallanteil aufweist. Ein derart aufgebautes Porennetzwerk wird als "Gradienten-Struktur" bezeichnet. Die metallischen Eigenschaften überwiegen an der Außenzone des Verbundwerkstoffs, während im Innern keramische Eigenschaften vorherrschen.

Erzielt wird diese Gradienten-Struktur durch eine Variation der Partikelgröße beim Aufspritzen auf den Grundkörper in einem flüssigkeitsstabilisierten Plasmastrahl. Man beginnt beispielsweise mit sehr feinem Pulver mit einem d₅₀ von 20 »m und steigert die Partikelgröße in den Außenschichten des keramischen Werkstoffs auf einen d₅₀-Wert >100 »m. Es ist aber auch die umgekehrte Verfahrensweise möglich, je nach dem, wo die der Metalloberfläche zugewandte Seite liegt. Wesentlich ist, daß die der Metallkonstruktion nächstliegende Fläche des Keramikverbundkörpers die Struktur aufweist, die aus dem Pulver mit dem großen Partikeldurchmesser erzeugt worden ist.

Zur Steigerung der Härte und Verschleißfestigkeit wird ein Mehrkomponentenwerkstoff auf Oxidbasis im vorreagierten Zustand verwendet werden. Unter Mehrkomponentenwerkstoffen werden Mischungen aus 2 oder mehreren oxidkeramischen Werkstoffen verstanden, die durch Mahlen in Pulverform gebracht und bei Sintertemperaturen vorreagiert werden. Erst danach erfolgt die Eingabe in die Reaktionszone des Plasmabrenners.

## Patentansprüche

1. Keramik-Metall-Verbundwerkstoff, bestehend aus einer porösen mit Metall infiltrierten Keramik, die aus mehreren Schichten unterschiedlicher Porengröße aufgebaut ist,
dadurch gekennzeichnet,
daß als Keramik ein Mehrkomponentenwerkstoff auf Oxidbasis im vorreagierten Zustand verwendet wird, d.h. Mischungen aus 2 oder mehreren oxidkeramischen Werkstoffen, die durch Mahlen in Pulverform gebracht und bei Sintertemperaturen vorreagiert werden; daß die schichten aus Keramikpartikeln aufgebaut sind, die einen Formfaktor größer 1:5 aufweisen und die Keramikpartikel in den einzelnen Schichten des Verbundwerkstoffs unterschiedliche Formfaktoren aufweisen, wobei die Schichtdicke zwischen 10 und 150 »m und der mittlere Porenradius zwischen 100 und 1000 nm bei einer offenen Endporosität von 5-14 % und einer Gesamtporosität von 5-30 % liegt und das Metall das Porenvolumen bis auf ein Restporenvolumen von 0,1 bis 10 %, bezogen auf die Ausgangsporosität ausfüllt.

2. Keramik-Metall-Verbundwerkstoff nach Anspruch 1,
dadurch gekennzeichnet,
daß als Keramik ein oxidkeramischer Werkstoff verwendet wird, der aus zwei oder mehr reinen Metalloxiden durch Insitu-Reaktion im Plasmastrahl entstanden ist.

3. Keramik-Metall-Verbundwerkstoff nach einem der vorhergehenden Ansprüche,
dadurch gekennzeichnet,
daß eine Keramikkomponente aus Aluminiumoxid oder Aluminiumtitanat besteht.

4. Keramik-Metall-Verbundwerkstoff nach einem der vorhergehenden Ansprüche,
dadurch gekennzeichnet,
daß das infiltrierte Metall aus Aluminium oder einer Aluminiumlegierung besteht.

5. Keramik-Metall-Verbundwerkstoff nach einem der vorhergehenden Ansprüche,
dadurch gekennzeichnet,
daß das infiltrierte Metall aus Titan oder einer Titanlegierung besteht.

## Claims

1. Ceramic/metal composite material, consisting of a porous ceramic infiltrated with metal and built up from a plurality of layers of different pore sizes, characterized in that the ceramic used is a multi-component material with an oxide base in the pre-reacted state, i.e. mixtures of 2 or more oxide-ceramic materials which are pulverised by grinding and prereacted at sintering temperatures; in that the layers are built up of ceramic particles having a shape factor of more than 1:5 and the ceramic particles have different shape factors in the individual layers of the composite material, the layer thickness being between 10 and 150 »m and the average pore radius being between 100 and 1000 nm, with an open final porosity of 5-14 % and an overall porosity of 5-30 %, and the metal filling the pore volume up to a residual pore volume of 0.1 to 10 % of the starting porosity.

2. Ceramic/metal composite material according to claim 1, characterized in that the ceramic used is an oxide-ceramic material produced from two or more pure metal oxides by in situ reaction in the plasma jet.

3. Ceramic/metal composite material according to one of the preceding claims, characterized in that one ceramic component consists of aluminium oxide or aluminium titanate.

4. Ceramic/metal composite material according to one of the preceding claims, characterized in that the infiltrated metal consists of aluminium or an aluminium alloy.

5. Ceramic/metal composite material according to one of the preceding claims, characterized in that the infiltrated metal consists of titanium or a titanium alloy.

## Revendications

1. Matériau composite céramique-métal constitué d'une céramique poreuse infiltrée par du métal, qui est constituée de plusieurs couches de tailles de pores différentes, caractérisé en ce qu'on utilise comme céramique un matériau polycomposant à base d'oxyde dans un état ayant préréagi, c'est-à-dire un mélange de deux ou plusieurs matériaux en céramique oxydée qui ont été amenés sous forme de poudre par broyage et que l'on a fait préréagir à des températures de frittage ; sont constitués de particules de céramique qui présentent un facteur de forme supérieur à 1:5 et en ce que les particules de céramique dans les diverses couches du matériau composite présentent des facteurs de forme différents, l'épaisseur de couche se situant entre 10 et 150 »m et le rayon moyen de pores entre 100 et 1000 nm avec une porosité finale ouverte de 5 à 14% et une porosité totale de 5-30%, et en ce que le métal remplit le volume des pores jusqu'à un volume de pores résiduel de 0,1 à 10%, par rapport à la porosité de départ.

2. Matériau composite céramique-métal selon la revendication 1, caractérisé en ce qu'on utilise comme céramique un matériau en céramique oxydé qui est apparu à partir de deux ou plusieurs oxydes métalliques purs par une réaction in situ dans un courant de plasma.

3. Matériau composite céramique-métal selon l'une des revendications précédentes, caractérisé en ce qu'un composant céramique se compose d'oxyde d'aluminium ou de titanate d'aluminium.

4. Matériau composite céramique-métal selon l'une des revendications précédentes, caractérisé en ce que le métal infiltré se compose d'aluminium ou d'un alliage d'aluminium.

5. Matériau composite céramique-métal selon l'une des revendications précédentes, caractérisé en ce que le métal infiltré se compose de titane ou d'un alliage de titane.
